# EUROPEAN PATENT APPLICATION

(11) **EP 4 008 761 A1**
(43) Date of publication of application: **08.06.2022**
(21) Application number: 21208536.9
(22) Date of filing: 16.11.2021
(51) Int. Cl.: C10L 3/12, C10G 2/00

(54) **ZERO EMISSION FUEL**

(30) Priority: 02.12.2020 US 202063120697 P
(71) Applicant: Galileo Technologies Corporation, Arcadia, California 91006 (US)
(72) Inventor: DEL CAMPO, Osvaldo, Buenos Aires (AR)
(74) Representative: Romano, Giuseppe

(57) **Abstract**

A zero emission liquefied fuel having a composition including a first portion and a second portion, where the first portion is one of (a) a Liquefied Natural Gas (LNG) or (b) a Compressed Natural Gas (CNG) sourced from fossil decomposition and the second portion is a Renewable Natural Gas (RNG). The Renewable Natural Gas (RNG) can be sourced from any renewable source, but is preferably sourced from dairy. The fuel composition can be formulated having a carbon intensity equal to zero.

## Description

### CROSS-REFERENCE TO RELATED APPLICATION

This Non-Provisional Utility Patent Application claims the benefit of United States Provisional Patent Application Serial Number 63/120,697, filed on December 02, 2020, which is incorporated herein in its entirety.

### FIELD OF THE INVENTION

The present invention relates generally to a zero emissions fuel, and more particularly to a fuel comprising a proportional ratio of one of (a) a liquefied natural gas (LNG) or (b) a Compressed Natural Gas (CNG) and a Renewable Natural Gas (RNG) to provide a zero emissions fuel.

### BACKGROUND OF THE PRESENT INVENTION

Natural gas is a naturally occurring hydrocarbon gas mixture consisting primarily of methane, and commonly includes varying amounts of other higher alkanes. Natural gas can also include a small percentage of at least one of carbon dioxide, nitrogen, hydrogen sulfide, or helium. Natural gas is formed when layers of decomposing plant and animal matter are exposed to intense heat and pressure under the surface of the Earth over millions of years. The energy that the plants originally obtained from the sun is stored in the form of chemical bonds in the gas.

Natural gas is composed primarily of methane, although it also contains ethane, propane, and traces of other gases. Depending on where it is extracted, the composition of natural gas varies between 87% and 96% methane with about 1.5% to 5% ethane, and 0.1% to 1.5% propane.

Natural gas is a known alternative to combustion fuels such as gasoline and diesel. Much effort has gone into the development of natural gas as an alternative combustion fuel in order to combat various drawbacks of gasoline and diesel including production costs and the subsequent emissions created by the use thereof. As is known in the art, natural gas is a cleaner burning fuel than other combustion fuels.

There are two common formats for the commercialization of natural gas: Compressed Natural Gas (CNG) and liquefied natural gas (LNG). CNG is made by compressing natural gas to less than 1% of its volume at standard atmospheric pressure. Consisting mostly of methane, CNG is odorless, colorless and tasteless. It is drawn from domestically drilled natural gas wells or in conjunction with crude oil production.

Compressed natural gas (CNG) is a cleaner and also cheaper alternative to other automobile fuels such as gasoline (petrol). By the end of 2014 there were over 20 million natural gas vehicles worldwide, led by Iran (3.5 million), China (3.3 million), Pakistan (2.8 million), Argentina (2.5 million), India (1.8 million), and Brazil (1.8 million). The energy efficiency is generally equal to that of gasoline engines, but lower compared with modern diesel engines. Gasoline vehicles that are converted to run on natural gas suffer because of the low compression ratio of their engines. The lower compression ration results in a cropping of delivered power while running on natural gas by approximately 10 to 15 percent. Engines specifically designed and manufactured to operate on Compressed Natural Gas (CNG) employ a higher compression ratio optimizing the fuel's higher octane number of 120 to 130.

Besides use in road vehicles, Compressed Natural Gas (CNG) can also be used in aircraft. Compressed natural gas (CNG) has been used in some aircraft like the Aviat Aircraft Husky 200 CNG and the Chromarat VX-1 KittyHawk.

Liquefied Natural Gas (LNG) is also being used in aircraft. Russian aircraft manufacturer Tupolev for instance is running a development program to produce LNG-powered and hydrogen-powered aircraft. The program has been running since the mid-1970s, and seeks to develop Liquefied Natural Gas (LNG) and hydrogen variants of the Tu-204 and Tu-334 passenger aircraft, and also the Tu-330 cargo aircraft. Depending on the current market price for jet fuel and Liquefied Natural Gas (LNG), fuel for an LNG-powered aircraft could cost 5,000 rubles (US $100) less per tonne, roughly 60%, with considerable reductions to carbon monoxide, hydrocarbon and nitrogen oxide emissions.

The advantages of liquid methane as a jet engine fuel are that it has more specific energy than the standard kerosene mixes do and that its low temperature can help cool the air which the engine compresses for greater volumetric efficiency, in effect replacing an intercooler. Alternatively, it can be used to lower the temperature of the exhaust.

The utilization of Liquefied Natural Gas (LNG) has expanded to other vehicles. Space vehicles, such as the Space X Blue Horizon rockets, use Liquefied Natural Gas (LNG) for at least a portion of their propulsion system and/or other on board power. A high percentage of new ships are all powered by Liquefied Natural Gas (LNG). For example, the new Disney and Carnival Cruise line cruise ships are powered by Liquefied Natural Gas (LNG).

Liquefied Natural Gas (LNG) is natural gas that is cooled to -260° Fahrenheit until it becomes a liquid and then stored at essentially atmospheric pressure. Converting natural gas to Liquefied Natural Gas (LNG), a process that reduces its volume by about 600 times, allows it to be transported. Once delivered to its destination, the liquefied natural gas (LNG) is warmed back into its original gaseous state so that it can be used just like existing natural gas supplies, by sending it through pipelines for distribution to homes and businesses.

When returned to its gaseous state, liquefied natural gas (LNG) is used across the residential, commercial and industrial sectors for purposes as diverse as heating and cooling homes, cooking, generating electricity and manufacturing paper, metal, glass and other materials. Liquefied natural gas (LNG) is also increasingly being used to fuel heavy-duty vehicles.

More and more heavy-duty vehicles are moving to Liquefied natural gas (LNG) as a fuel of choice. Using Liquefied natural gas (LNG) and natural gas to fuel vehicles reduces greenhouse gas emissions by 30 percent versus conventional liquid fuels in accordance with the US Department of Energy.

Then, it is difficult to understand why not more Americans are driving natural gas cars. The U.S. is the largest natural gas producer in the world. If it could figure out a way to use that abundant fuel in automobiles it could reduce oil dependency, give drivers more choices and reduce air pollution. There are very few personal vehicles that run on Compressed Natural Gas (CNG), and hardly any refueling stations at which to gas up. Auto companies do not want to build Compressed Natural Gas (CNG) vehicles if people do not have a place to refuel, and no company is going to build a Compressed Natural Gas (CNG) refueling station without any customers.

Liquefied Natural Gas (LNG) provides one solution to reducing CO2 emissions. One significant drawback of Liquefied Natural Gas (LNG) is that the Liquefied Natural Gas (LNG) is a limited resource, or more specifically not considered a renewable energy.

Renewable Natural Gas (RNG) or biogas, also known as Sustainable Natural Gas (SNG) or biomethane, is a biogas which has been upgraded to a quality similar to fossil natural gas and having a methane concentration of 90% or greater. A biogas is a gaseous form of methane obtained from biomass. By upgrading the quality to that of natural gas, it becomes possible to distribute the gas to customers via the existing gas grid within existing appliances. Renewable natural gas is a subset of synthetic natural gas or substitute natural gas (SNG).

Renewable natural gas (RNG) or biogas is a pipeline-quality gas that is fully interchangeable with conventional natural gas and thus can be used in natural gas vehicles.

Renewable Natural Gas (RNG) adheres to existing production and distribution processes used for other fuels, where the Renewable Natural Gas (RNG) can be produced and distributed via an existing gas grid, making it an attractive means of supplying existing customers with renewable heat and renewable gas energy, while requiring no extra capital outlay of the company and/or customer. The use of existing gas network also enables distribution of gas energy over vast distances at a minimal cost in terms of energy consumption. Existing networks would allow the Renewable Natural Gas (RNG) or biogas to be sourced from remote markets, such as Russia or Scandinavia, which are rich in low-cost biomass. Renewable Natural Gas (RNG) or biogas can also be converted into a liquefied state or a liquefied natural gas (LNG) for direct use as fuel in a transport sector.

In combination with power-to-gas, whereby the carbon dioxide and carbon monoxide fraction of Renewable Natural Gas (RNG) or biogas are converted to methane using electrolyzed hydrogen, the renewable gas potential of raw biogas is approximately doubled. Raw biogas is generally 50% Methane 50% CO2 Renewable Natural Gas (RNG) is obtained by the separation of CO2 by membranes or molecular sieves.

One significant consideration is that Methane emissions are more critical and harmful than emissions of C02. The impact of Methane emissions is significantly greater than the impact of CO2 emissions. The entire food and waste chain produces methane in quantities and each ton of methane that goes to the atmosphere is equivalent to around 24 to 28 tons of CO2.

By burning Methane in an Internal Combustion Engine (ICE) to produce energy, as a mass conservation by-product, the combustion process will convert approximately one ton of Methane to one ton of CO2.

Consequently, if a combustible fuel were to capture one (1) ton of Methane and use it in an Internal Combustion Engine (ICE), the process is essentially capturing or reducing 24 potential tons of CO2 that could have been emitted into the atmosphere (by the equivalence). The resulting emission is only one (1) ton of CO2, resulting in a net reduction 23 ton of CO2.

Therefore, the present invention is directed to a composition that provides an ecologically friendly fuel, while providing a cost effective solution that can support the fuel consumption needs for transportation vehicles, including cars, trucks, motorcycles, aviation, water vessels, and the like. One desired result would be to provide a fuel composition that can be distributed using currently available distribution and storage systems, currently available fuel delivery systems, and a fuel that can be utilized in a majority of existing vehicles, all while maintaining considerations for ecological and economic benefits. Ecological considerations would include utilization of a renewable energy source and greenhouse gas effects.

### BRIEF SUMMARY OF THE INVENTION

This invention is directed to a fuel composition that provides zero emissions. The fuel composition comprising a mixture of fossil based Liquefied Natural Gas (LNG) and Renewable Natural Gas (RNG) or biogas.

In one aspect of the present invention, a fuel composition is a fuel composition comprising:
a biomass generated Renewable Natural Gas (RNG); and
a fossil generated one of (a) Liquefied Natural Gas (LNG) or (b) a Compressed Natural Gas (CNG),
wherein the combination of the biomass generated Renewable Natural Gas (RNG) and the one of (a) the fossil generated Liquefied Natural Gas (LNG) or (b) the Compressed Natural Gas (CNG) generates a zero carbon intensity mixtureln a second aspect of the present invention, a volume of the fossil generated one of (a) the Liquefied Natural Gas (LNG) or (b) the Compressed Natural Gas (CNG) is higher in:
   (a) a mixture where the fuel composition includes a Renewable Natural Gas (RNG) produced from a source generating a carbon intensity of a lower units of mass of carbon dioxide released per unit of energy compared to
   (b) a mixture where the fuel composition includes a Renewable Natural Gas (RNG) produced from a source generating a carbon intensity of a higher units of mass of carbon dioxide released per unit of energy.

For example, the volume of the fossil generated one of (a) the Liquefied Natural Gas (LNG) or (b) the Compressed Natural Gas (CNG) is higher in:
(a) a mixture where the fuel composition includes a Renewable Natural Gas (RNG) produced from cow dung generating a carbon intensity of 200 grams of carbon dioxide released per megajoule of energy compared to
(b) a mixture where the fuel composition includes a Renewable Natural Gas (RNG) produced from wastewater generating a carbon intensity of 40 grams of carbon dioxide released per megajoule of energy.

In another aspect, the Renewable Natural Gas (RNG) can comprise one of a first portion obtained from a first biomethane source having a first carbon intensity and a second portion obtained from a second biomethane source having a second carbon intensity, wherein the mixture has a total carbon intensity based upon the sum of the carbon intensity of the first portion of the Renewable Natural Gas (RNG) and the carbon intensity of the second portion of the Renewable Natural Gas (RNG) used in the fuel composition to generate the zero sum mixture of carbon intensity.

In one aspect, the fuel composition comprising:
a biomass generated Renewable Natural Gas (RNG); and
a fossil generated one of (a) a Liquefied Natural Gas (LNG) or (b) a Compressed Natural Gas (CNG),
wherein the fossil generated one of (a) the Liquefied Natural Gas (LNG) or (b) the Compressed Natural Gas (CNG) is provided in a volume defining a first percentage of a total volume of the fuel composition,
wherein the biomass generated Renewable Natural Gas (RNG) is provided in a volume defining a second percentage of the total volume of the fuel composition,
wherein a sum of the first percentage and the second percentage is equal to or less than one-hundred percent.

In a second aspect, the fuel composition has a ratio of the first percentage and the second percentage resulting in a zero emission when the fuel composition combusts.

In another aspect, the sum of the first percentage and the second percentage is equal to one-hundred percent.

In yet another aspect, the sum of the first percentage and the second percentage is substantially equal to one-hundred percent.

In yet another aspect, the sum of the first percentage and the second percentage is substantially equal to one-hundred percent, wherein substantially equal to one-hundred percent refers to between 99 and 100 percent (99-100%).

In yet another aspect, the sum of the first percentage and the second percentage is substantially equal to one-hundred percent, wherein substantially equal to one-hundred percent refers to between 98 and 100 percent (98-100%).

In yet another aspect, the sum of the first percentage and the second percentage is generally equal to one-hundred percent.

In yet another aspect, the sum of the first percentage and the second percentage is generally equal to one-hundred percent, wherein generally equal to one-hundred percent refers to between 95 and 100 percent (95-100%).

In yet another aspect, the sum of the first percentage and the second percentage is generally equal to one-hundred percent, wherein generally equal to one-hundred percent refers to between 92.5 and 100 percent (92.5-100%).

In yet another aspect, the sum of the first percentage and the second percentage is generally equal to one-hundred percent, wherein generally equal to one-hundred percent refers to between 90 and 100 percent (90-100%).

In yet another aspect, the second percentage is equal to 23.7% of the first percentage.

In yet another aspect, the second percentage is substantially equal to 23.7% of the first percentage.

In yet another aspect, the second percentage is generally equal to 23.7% of the first percentage.

In yet another aspect, the second percentage is between 23 and 25 percent (23-25%) of the first percentage.

In yet another aspect, the second percentage is between and including 23 and 25 percent (23-25%) of the first percentage.

In yet another aspect, the second percentage is between 22 and 26 percent (22-26%) of the first percentage.

In yet another aspect, the second percentage is between and including 22 and 26 percent (22-26%) of the first percentage.

In yet another aspect, the second percentage is between 21 and 27 percent (21-27%) of the first percentage.

In yet another aspect, the second percentage is between and including 21 and 27 percent (21-27%) of the first percentage.

In yet another aspect, the second percentage is between 19 and 28 percent (19-28%) of the first percentage.

In yet another aspect, the second percentage is between and including 19 and 28 percent (19-28%) of the first percentage.

In yet another aspect, the second percentage is between 17 and 30 percent (17-30%) of the first percentage.

In yet another aspect, the second percentage is between and including 17 and 30 percent (17-30%) of the first percentage.

In yet another aspect, the second percentage is between 15 and 32 percent (15-32%) of the first percentage.

In yet another aspect, the second percentage is between and including 15 and 32 percent (15-32%) of the first percentage.

In yet another aspect, the second percentage is equal to 19.2% of the total volume of the fuel composition.

In yet another aspect, the second percentage is substantially equal to 19.2% of the total volume of the fuel composition.

In yet another aspect, the second percentage is generally equal to 19.2% of the total volume of the fuel composition.

In yet another aspect, the second percentage is between 19.0 and 19.5 percent (19.0-19.5%) of the total volume of the fuel composition.

In yet another aspect, the second percentage is between and including 19.0 and 19.5 percent (19.0-19.5%) of the total volume of the fuel composition.

In yet another aspect, the second percentage is between 18.5 and 19.5 percent (18.5-19.5%) of the total volume of the fuel composition.

In yet another aspect, the second percentage is between and including 18.5 and 19.5 percent (18.5-19.5%) of the total volume of the fuel composition.

In yet another aspect, the second percentage is between 18.5 and 20 percent (18.5-20%) of the total volume of the fuel composition.

In yet another aspect, the second percentage is between and including 18.5 and 20 percent (18.5-20%) of the total volume of the fuel composition.

In yet another aspect, the second percentage is between 18 and 20 percent (18-20%) of the total volume of the fuel composition.

In yet another aspect, the second percentage is between and including 18 and 20 percent (18-20%) of the total volume of the fuel composition.

In yet another aspect, the second percentage is between 16 and 22 percent (16-22%) of the total volume of the fuel composition.

In yet another aspect, the second percentage is between and including 16 and 22 percent (16-22%) of the total volume of the fuel composition.

In yet another aspect, the second percentage is between 15 and 25 percent (15-25%) of the total volume of the fuel composition.

In yet another aspect, the second percentage is between and including 15 and 25 percent (15-25%) of the total volume of the fuel composition.

In yet another aspect, the second percentage is between 15 and 30 percent (15-30%) of the total volume of the fuel composition.

In yet another aspect, the second percentage is between and including 15 and 30 percent (15-30%) of the total volume of the fuel composition.

In a second consideration, the fuel composition comprising:
a fossil generated Liquefied Natural Gas (LNG); and
a biomass generated Renewable Natural Gas (RNG),
wherein is provided in a volume defining a first percentage of a total volume of the fuel composition,
wherein a volume of the biomass generated Renewable Natural Gas (RNG) and a volume of the fossil generated Liquefied Natural Gas (LNG) are determined by a ratio between the volume of the biomass generated Renewable Natural Gas (RNG) and the volume of the fossil generated Liquefied Natural Gas (LNG),
wherein the ratio between the volume of the biomass generated Renewable Natural Gas (RNG) and the volume of the fossil generated Liquefied Natural Gas (LNG) results in a fuel that emits zero emissions.

In aspect, the ratio between the volume of the biomass generated Renewable Natural Gas (RNG) and the volume of the fossil generated Liquefied Natural Gas (LNG) is 23.7%.

In another aspect, the ratio between the volume of the biomass generated Renewable Natural Gas (RNG) and the volume of the fossil generated Liquefied Natural Gas (LNG) is substantially equal to 23.7%.

In yet another aspect, the ratio between the volume of the biomass generated Renewable Natural Gas (RNG) and the volume of the fossil generated Liquefied Natural Gas (LNG) is approximately 23.7%.

In yet another aspect, the ratio between the volume of the biomass generated Renewable Natural Gas (RNG) and the volume of the fossil generated Liquefied Natural Gas (LNG) is generally 23.7%.

In yet another aspect, the ratio between the volume of the biomass generated Renewable Natural Gas (RNG) and the volume of the fossil generated Liquefied Natural Gas (LNG) is between 23.5% and 23.9%.

In yet another aspect, the ratio between the volume of the biomass generated Renewable Natural Gas (RNG) and the volume of the fossil generated Liquefied Natural Gas (LNG) is between and including 23.5% and 23.9%.

In yet another aspect, the ratio between the volume of the biomass generated Renewable Natural Gas (RNG) and the volume of the fossil generated Liquefied Natural Gas (LNG) is between 23.2% and 24.7%.

In yet another aspect, the ratio between the volume of the biomass generated Renewable Natural Gas (RNG) and the volume of the fossil generated Liquefied Natural Gas (LNG) is between and including 23.2% and 24.7%.

In yet another aspect, the ratio between the volume of the biomass generated Renewable Natural Gas (RNG) and the volume of the fossil generated Liquefied Natural Gas (LNG) is between 22.7% and 24.7%.

In yet another aspect, the ratio between the volume of the biomass generated Renewable Natural Gas (RNG) and the volume of the fossil generated Liquefied Natural Gas (LNG) is between and including 22.7% and 24.7%.

In yet another aspect, the ratio between the volume of the biomass generated Renewable Natural Gas (RNG) and the volume of the fossil generated Liquefied Natural Gas (LNG) is between 21.0% and 26.0%.

In yet another aspect, the ratio between the volume of the biomass generated Renewable Natural Gas (RNG) and the volume of the fossil generated Liquefied Natural Gas (LNG) is between and including 21.0% and 26.0%.

In yet another aspect, the ratio between the volume of the biomass generated Renewable Natural Gas (RNG) and the volume of the fossil generated Liquefied Natural Gas (LNG) is between 19.0% and 28.0%.

In yet another aspect, the ratio between the volume of the biomass generated Renewable Natural Gas (RNG) and the volume of the fossil generated Liquefied Natural Gas (LNG) is between and including 19.0% and 28.0%.

In yet another aspect, the ratio between the volume of the biomass generated Renewable Natural Gas (RNG) and the volume of the fossil generated Liquefied Natural Gas (LNG) is between 17.0% and 30.0%.

In yet another aspect, the ratio between the volume of the biomass generated Renewable Natural Gas (RNG) and the volume of the fossil generated Liquefied Natural Gas (LNG) is between and including 17.0% and 30.0%.

In yet another aspect, the ratio between the volume of the biomass generated Renewable Natural Gas (RNG) and the volume of the fossil generated Liquefied Natural Gas (LNG) is between 15.0% and 35.0%.

In yet another aspect, the ratio between the volume of the biomass generated Renewable Natural Gas (RNG) and the volume of the fossil generated Liquefied Natural Gas (LNG) is between and including 15.0% and 35.0%.

These and other aspects, features, and advantages of the present invention will become more readily apparent from the attached drawings and the detailed description of the preferred embodiments, which follow.

### BRIEF DESCRIPTION OF THE DRAWINGS

The preferred embodiments of the invention will hereinafter be described in conjunction with the appended drawings provided to illustrate and not to limit the invention, where like designations denote like elements, and in which:
FIG. 1 presents a graph illustrating a change in ingredient contribution levels of a liquefied fuel composition, wherein the change in ingredient amounts is based upon a level of carbon intensity of a Renewable Natural Gas (RNG) of the liquefied fuel composition;
FIG. 2 presents a table illustrating emission rates and efficiency costs respective to energy for different exemplary fuel compositions;
FIG. 3A presents a table illustrating varying formulations to generate a vehicle fuel comprising a first portion obtained from fossil generated liquefied natural gas and a second portion obtained from a renewable natural gas, wherein the fuel emits zero emissions, wherein the formulations are presented as a percentage of a total volume;
FIG. 3B presents a table illustrating varying formulations to generate a vehicle fuel comprising a first portion obtained from fossil generated liquefied natural gas and a second portion obtained from a renewable natural gas, wherein the fuel emits zero emissions, wherein the formulations are presented as a ratio between the second portion and the first portion;
FIG. 4 presents a graphical representation of carbon intensity levels of different key transportation fuels;
FIG. 5 presents a graphical representation of exemplary carbon offsets in view of emission of CO2 generated by different key transportation fuels; and
FIG. 6 presents a graphical representation of emissions over a lifecycle of a transportation vehicle.

Like reference numerals, when used, refer to like parts throughout the several views of the drawings.

### DETAILED DESCRIPTION OF THE INVENTION

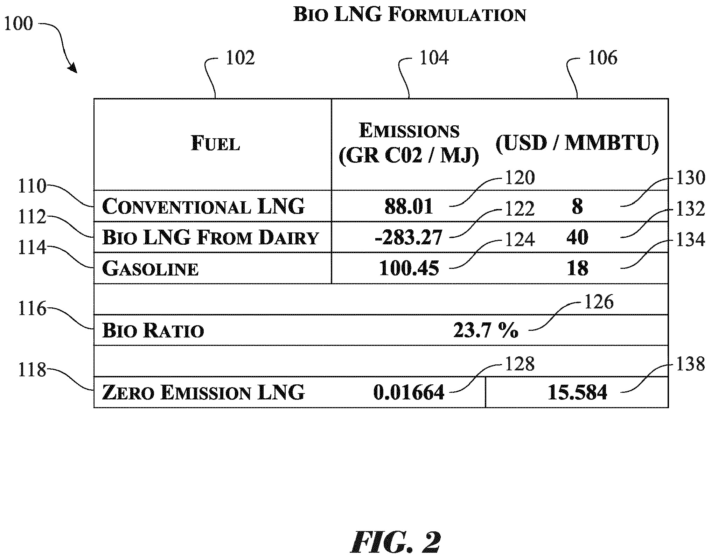

Detailed embodiments of the present invention are disclosed herein. It will be understood that the disclosed embodiments are merely exemplary of the invention that may be embodied in various and alternative forms. The figures are not necessarily to scale, and some features may be exaggerated or minimized to show details of particular embodiments, features, or elements. Specific structural and functional details, dimensions, or shapes disclosed herein are not limiting but serve as a basis for the claims and for teaching a person of ordinary skill in the art the described and claimed features of embodiments of the present invention. The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper", "lower", "left", "rear", "right", "front", "vertical", "horizontal", and derivatives thereof shall relate to the invention as oriented in FIG. 2. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

Furthermore, there is no intention to be bound by any expressed or implied theory presented in the preceding technical field, background, brief summary or the following detailed description. It is also to be understood that the specific devices illustrated in the attached drawings, and described in the following specification, are simply exemplary embodiments of the inventive concepts defined in the appended claim. Hence, specific dimensions and other physical characteristics relating to the embodiments disclosed herein are not to be considered as limiting, unless the claims expressly state otherwise.

Liquefied Natural Gas (LNG) of fossil origin is a fuel that considerably reduces emissions from heavy vehicles. Biogas (including renewable Liquefied Natural Gas, which is sourced from) since it starts from the methane collection base that would go to the Atmosphere (the which is 23 times more polluting than CO2) to later convert it into combustion into CO2, it is considered a negative emissions fuel.

Liquefied Natural Gas (LNG) is sourced from fossil decomposition over millions of years and is therefore not considered to be a renewable energy source. Renewable Natural Gas (RNG), or biogas, is produced through three main processes:
1) Anaerobic digestion of organic (normally moist) material, otherwise known as biomethanation.
2) Production through the Sabatier reaction. With the Sabatier reaction, the gas from primary production has to be upgraded with a secondary step in order to produce gas that is suitable for injection into the gas grid.
3) Thermal gasification of organic (normally dry) material.

Renewable Natural Gas (RNG) is limited by cost and availability. Renewable Natural Gas (RNG) is produced from sewage, food waste such as food thrown away by supermarkets and restaurants, organic waste created by businesses such as breweries, agricultural waste, and the like. By formulating a fuel comprising a first portion sourced from fossil decomposition and a second portion sourced from a renewable source, the fuel provides an optimal solution for cost, environmental resources, and climate management.

An emission intensity, also referred to as a carbon intensity (C.I.) is an emission rate of a given pollutant relative to the intensity of a specific activity, or an industrial production process. The emission intensity can be measured as the grams of carbon dioxide (CO2) released per megajoule of energy produced. The emission intensities or carbon intensities are used to derive estimates of air pollutant or greenhouse gas emissions based on the amount of fuel combusted, the number of animals in animal husbandry, on industrial production levels, distances traveled or similar activity data. Emission intensities may also be used to compare the environmental impact of different fuels or activities.

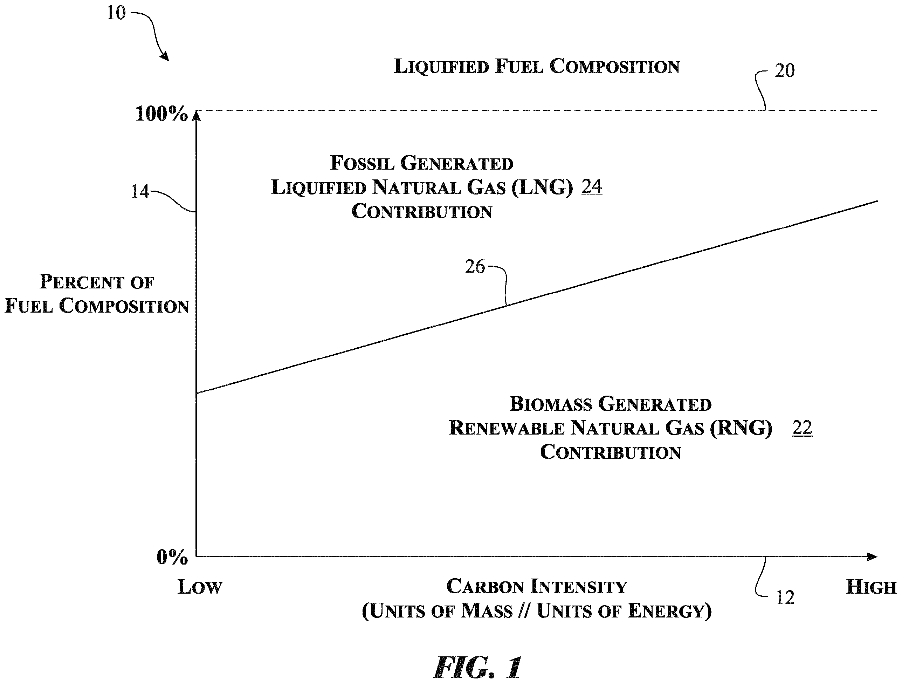

Renewable Natural Gas (RNG) can be created and collected from a variety of different sources. Each of the different biomass sources generates a Renewable Natural Gas (RNG) having a different carbon intensity level. For example, the volume of the fossil generated Liquefied Natural Gas (LNG) is higher in (a) a mixture where the fuel composition includes a Renewable Natural Gas (RNG) produced from cow dung generating a carbon intensity of 200 grams of carbon dioxide released per megajoule of energy compared to (b) a mixture where the fuel composition includes a Renewable Natural Gas (RNG) produced from wastewater generating a carbon intensity of 40 grams of carbon dioxide released per megajoule of energy. A liquefied fuel composition comprising a first volume comprising fossil generated Liquefied Natural Gas (LNG) 24 and a second volume comprising biomass generated renewable Natural Gas (RNG) 22 is introduced in a liquefied fuel composition chart 10 presented in FIG. 1. The liquefied fuel composition chart 10 presents a percent contribution 14 of each of the biomass generated renewable natural gas (RNG) 22 and the fossil generated liquefied natural gas (LNG) 24 of a total fuel composition 20 based upon a carbon intensity level 12 of the biomass generated renewable natural gas (RNG) 22. As the Carbon Intensity level increases, the contribution of the biomass generated renewable natural gas (RNG) 22 also increases to maintain a total fuel composition 20 which generates a zero sum mixture of carbon intensity.

As illustrated, a volume of the fossil generated Liquefied Natural Gas (LNG) 24 is higher in (a) a mixture where the fuel composition 20 includes a Renewable Natural Gas (RNG) 22 produced from a source generating a carbon intensity 12 of a lower units of mass of carbon dioxide released per unit of energy compared to (b) a mixture where the fuel composition 20 includes a Renewable Natural Gas (RNG) 22 produced from a source generating a carbon intensity 12 of a higher units of mass of carbon dioxide released per unit of energy.

For example, the volume of the fossil generated Liquefied Natural Gas (LNG) 24 is higher in (a) a mixture where the fuel composition 20 includes a Renewable Natural Gas (RNG) 22 produced from cow dung generating a carbon intensity 12 of 200 grams of carbon dioxide released per megajoule of energy compared to (b) a mixture where the fuel composition 20 includes a Renewable Natural Gas (RNG) 22 produced from wastewater generating a carbon intensity 12 of 40 grams of carbon dioxide released per megajoule of energy.

Similarly, a volume of the fossil generated Liquefied Natural Gas (LNG) 24 is lower in (a) a mixture where the fuel composition includes a Renewable Natural Gas (RNG) produced from a source generating a carbon intensity of a higher units of mass of carbon dioxide released per unit of energy compared to (b) a mixture where the fuel composition includes a Renewable Natural Gas (RNG) produced from a source generating a carbon intensity of a lower units of mass of carbon dioxide released per unit of energy.

For example, the volume of the fossil generated Liquefied Natural Gas (LNG) 24 is lower in (a) a mixture where the fuel composition 20 includes a Renewable Natural Gas (RNG) 22 produced from wastewater generating a carbon intensity 12 of 40 grams of carbon dioxide released per megajoule of energy compared to (b) a mixture where the fuel composition 20 includes a Renewable Natural Gas (RNG) 22 produced from cow dung generating a carbon intensity 12 of 200 grams of carbon dioxide released per megajoule of energy.

The Renewable Natural Gas (RNG) 22 can comprise one of a first portion obtained from a first biomethane source having a first carbon intensity 12 and a second portion obtained from a second biomethane source having a second carbon intensity 12, wherein the mixture has a total carbon intensity 12 based upon the sum of the carbon intensity 12 of the first portion of the Renewable Natural Gas (RNG) 22 and the carbon intensity 12 of the second portion of the Renewable Natural Gas (RNG) 22 used in the fuel composition to generate the zero sum mixture of carbon intensity.

A fuel emissions table 100, presented in FIG. 2, illustrates the environmental and economic statuses of the following fuel types 102: conventional liquefied natural gas (LNG) 110, dairy sourced bio liquefied natural gas 112, and gasoline 114. The environmental levels associated with use of the various fuel types 102 is presented in a column presenting an emissions (GR CO2 / MJ) 104 resulting from use of the respective fuel type 102. In this column, the use of the conventional liquefied natural gas (LNG) 110 as a fuel exhausts an estimated conventional liquefied natural gas (LNG) emissions 120 of 88.01 GR CO2/MJ, the use of the dairy sourced bio liquefied natural gas 112 as a fuel exhausts an estimated dairy sourced bio liquefied natural gas emissions 122 of -283.27 GR CO2/MJ, and the use of the gasoline 114 as a fuel exhausts an estimated gasoline emissions 124 of 100.45 GR CO2/MJ

The economics associated with use of the various fuel types 102 is presented in a column presenting a US dollars / one million British Thermal Units (USD/MMBTU) 106 of the respective fuel type 102. In this column, the conventional liquefied natural gas (LNG) 110 has an estimated cost efficiency rate 130 of 8 USD/MMBTU, the dairy sourced bio liquefied natural gas 112 has an estimated cost efficiency rate 132 of 40 USD/MMBTU, and the gasoline 114 has an estimated cost efficiency rate 134 of 18 USD/MMBTU.

The use of a fuel having a bio ratio 116 of 23.7% (biogas to liquefied natural gas ratio (Bio Ratio 126)) reduces the emission rate from 88.01 GR C02/MJ (120) associated with conventional Liquefied Natural Gas (LNG) to 0.01664 GR C02/MJ (128), while increasing the economic impact from 8 USD/MMBTU (130) to 15.584 USD/MMBTU (138). The bio ratio liquefied natural gas (Bio Ratio) 116 having a suitable mixture can be referred to as a zero emission liquefied natural gas (LNG) 118. The use of the zero emission liquefied natural gas (LNG) 118 as a fuel exhausts an estimated zero emission liquefied natural gas (LNG) emissions 128 of 0.01664 GR C02/MJ. The zero emission liquefied natural gas (LNG) 118 has an estimated cost efficiency rate 138 of 15.584 USD/MMBTU.

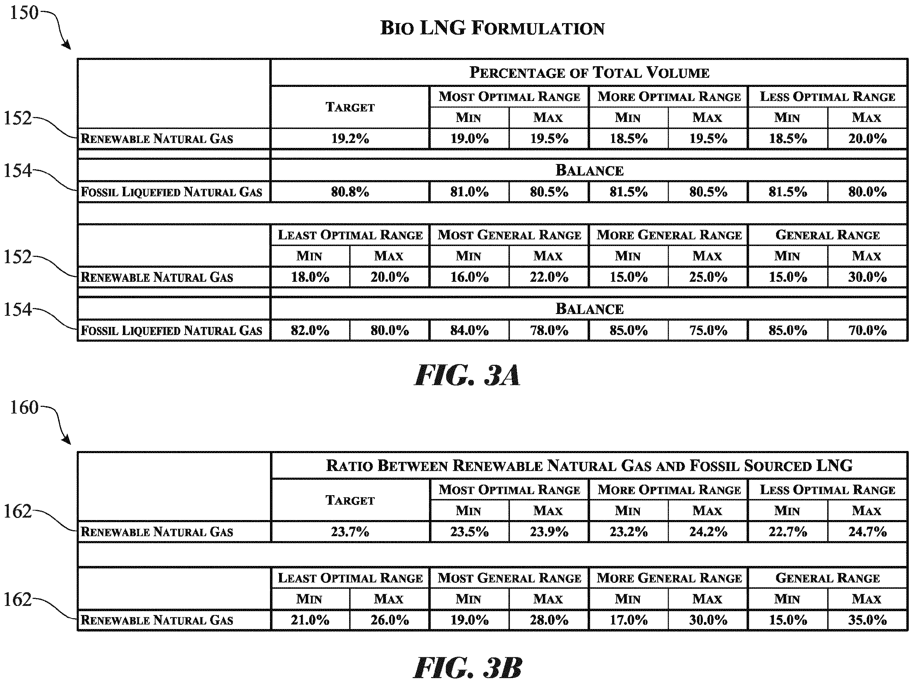

The fuel having a bio ratio liquefied natural gas (Bio Ratio) 116 is considered as being a target or optimal ratio. The ratio between the renewable liquefied gas (RNG) 152 and the fossil sourced Liquefied Natural Gas (LNG) 154 can vary based upon any of a number of factors. A biomix Liquefied Natural Gas (LNG) composition by percentage of total volume 150, presented in FIG. 3A, defines a fuel composition based upon a percentage of a Renewable Natural Gas (RNG) 152 of the total volume of the fuel. A balance of the fuel composition would include a percentage of the fossil sourced Liquefied Natural Gas (LNG) 154 and other ingredients or additives, such as a cleansing solution, a moisture absorbent, a combustion additive, and the like.

The biomix Liquefied Natural Gas (LNG) composition by percentage of total volume 150 identifies a number of ranges of the Renewable Natural Gas (RNG) 152 to manufacture the fuel composition. A target or optimal fuel composition, the Renewable Natural Gas (RNG) would by 19.2% of the overall volume of the fuel composition. The balance of 80.8% of the total volume of the fuel composition would include a volume of fossil sourced liquefied natural gas (LNG) and any additives.

A most optimal fuel composition, the Renewable Natural Gas (RNG) would comprise between 19.0% and 19.5% of the overall volume of the fuel composition. The balance of between 81.0% and 80.5% of the total volume of the fuel composition would include a volume of fossil sourced liquefied natural gas (LNG) and any additives.

A more optimal fuel composition, the Renewable Natural Gas (RNG) would comprise between 18.5% and 19.5% of the overall volume of the fuel composition. The balance of between 81.5% and 80.5% of the total volume of the fuel composition would include a volume of fossil sourced liquefied natural gas (LNG) and any additives.

A less optimal fuel composition, the Renewable Natural Gas (RNG) would comprise between 18.5% and 20.0% of the overall volume of the fuel composition. The balance of between 81.5% and 80.0% of the total volume of the fuel composition would include a volume of fossil sourced liquefied natural gas (LNG) and any additives.

A least optimal fuel composition, the Renewable Natural Gas (RNG) would comprise between 18.0% and 20.0% of the overall volume of the fuel composition. The balance of between 82.0% and 80.0% of the total volume of the fuel composition would include a volume of fossil sourced liquefied natural gas (LNG) and any additives.

A most general fuel composition, the Renewable Natural Gas (RNG) would comprise between 16.0% and 22.0% of the overall volume of the fuel composition. The balance of between 84.0% and 78.0% of the total volume of the fuel composition would include a volume of fossil sourced liquefied natural gas (LNG) and any additives.

A more general fuel composition, the Renewable Natural Gas (RNG) would comprise between 15.0% and 25.0% of the overall volume of the fuel composition. The balance of between 85.0% and 75.0% of the total volume of the fuel composition would include a volume of fossil sourced liquefied natural gas (LNG) and any additives.

A general fuel composition, the Renewable Natural Gas (RNG) would comprise between 15.0% and 30.0% of the overall volume of the fuel composition. The balance of between 85.0% and 70.0% of the total volume of the fuel composition would include a volume of fossil sourced liquefied natural gas (LNG) and any additives.

Each of the above ranges can be considered to be inclusive or exclusive of the range boundaries.

A biomix Liquefied Natural Gas (LNG) composition by a Renewable Natural Gas (RNG) ratio 160, presented in FIG. 3B, defines a fuel composition based upon a ratio between a volume of the Renewable Natural Gas (RNG) 162 and a volume of the fossil sourced Liquefied Natural Gas (LNG). This provides a method of determining ingredients based upon the combustible elements of the fuel composition. The balance of the total volume of the fuel composition would include any additives.

The biomix Liquefied Natural Gas (LNG) composition by a Renewable Natural Gas (RNG) ratio 160 identifies a number of ratios between the volume of the Renewable Natural Gas (RNG) 162 and a volume of the fossil sourced Liquefied Natural Gas (LNG) 164 to manufacture the fuel composition. In a target or optimal fuel composition, a volume of the Renewable Natural Gas (RNG) 162 would be provided as a ratio of 23.7% to the volume of fossil sourced Liquefied Natural Gas (LNG) 164.

In a most optimal fuel composition, a volume of the Renewable Natural Gas (RNG) 162 would be provided as a ratio of between 23.5% and 23.9% to the volume of fossil sourced Liquefied Natural Gas (LNG) 164.

In a more optimal fuel composition, a volume of the Renewable Natural Gas (RNG) 162 would be provided as a ratio of between 23.2% and 24.2% to the volume of fossil sourced Liquefied Natural Gas (LNG) 164.

In a less optimal fuel composition, a volume of the Renewable Natural Gas (RNG) 162 would be provided as a ratio of between 22.7% and 24.7% to the volume of fossil sourced Liquefied Natural Gas (LNG) 164.

In a least optimal fuel composition, a volume of the Renewable Natural Gas (RNG) 162 would be provided as a ratio of between 21.0% and 26.0% to the volume of fossil sourced Liquefied Natural Gas (LNG) 164.

In a most general fuel composition, a volume of the Renewable Natural Gas (RNG) 162 would be provided as a ratio of between 19.0% and 28.0% to the volume of fossil sourced Liquefied Natural Gas (LNG) 164.

In a most general fuel composition, a volume of the Renewable Natural Gas (RNG) 162 would be provided as a ratio of between 19.0% and 28.0% to the volume of fossil sourced Liquefied Natural Gas (LNG) 164.

In a more general fuel composition, a volume of the Renewable Natural Gas (RNG) 162 would be provided as a ratio of between 17.0% and 30.0% to the volume of fossil sourced Liquefied Natural Gas (LNG) 164.

In a less general fuel composition, a volume of the Renewable Natural Gas (RNG) 162 would be provided as a ratio of between 15.0% and 35.0% to the volume of fossil sourced Liquefied Natural Gas (LNG) 164.

Each of the above ranges can be considered to be inclusive or exclusive of the range boundaries.

The above exemplary fuel compositions reference any Renewable Natural Gas (RNG). The preferred Renewable Natural Gas (RNG) would be a Renewable Natural Gas (RNG) sourced from dairy products.

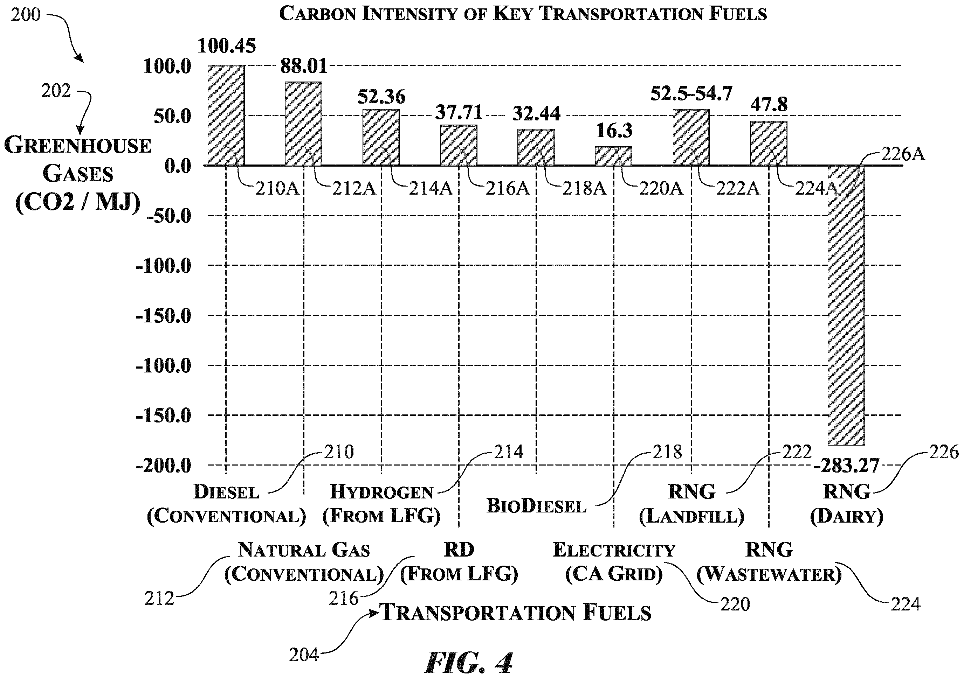

A carbon intensity of key transportation fuels is presented in a transportation fuel carbon intensity chart 200, shown in FIG. 4. The transportation fuel carbon intensity chart 200 presents the discharged emissions measured in a greenhouse gas emission rate (CO2 / MU) 202 for a variety of transportation fuels 204.

When burned during compression, a diesel fuel 210 emits a diesel fuel emission rate 210A of 100.45 CO2/MJ

When burned during compression, a natural gas 212 emits a natural gas emission rate 212A of 88.01 CO2/MJ

When burned during compression, hydrogen 214 emits a hydrogen emission rate 214A of 52.36 CO2/MJ

When burned during compression, renewable diesel (RD) 216 emits a renewable diesel (RD) emission rate 216A of 37.71 CO2/MJ

When burned during compression, a biodiesel fuel 218 emits a biodiesel fuel emission rate 218A of 32.44 CO2/MJ.

When burned during compression, an electricity source 220 emits an electricity emission rate 220A of 16.3 CO2/MJ

When burned during compression, a landfill sourced renewable natural gas (RNG) 222 emits a landfill sourced renewable natural gas (RNG) emission rate 222A of between 52.5-54.7 CO2/MJ

When burned during compression, a wastewater sourced renewable natural gas (RNG) 224 emits a wastewater sourced renewable natural gas (RNG) emission rate 224A of 47.8 CO2/MJ.

When burned during compression, a dairy sourced renewable natural gas (RNG) 226 emits a dairy sourced renewable natural gas (RNG) emission (absorption) rate 226A of -283.27 CO2/MJ.

The use of the dairy sourced renewable natural gas (RNG) 226 provides a significantly negative value of greenhouse gas emission rate (CO2 / MU) 202. When the dairy sourced renewable natural gas (RNG) 226 is combined with the natural gas 212, the resulting fuel composition provides a fuel solution that accommodates both economic and environmental goals.

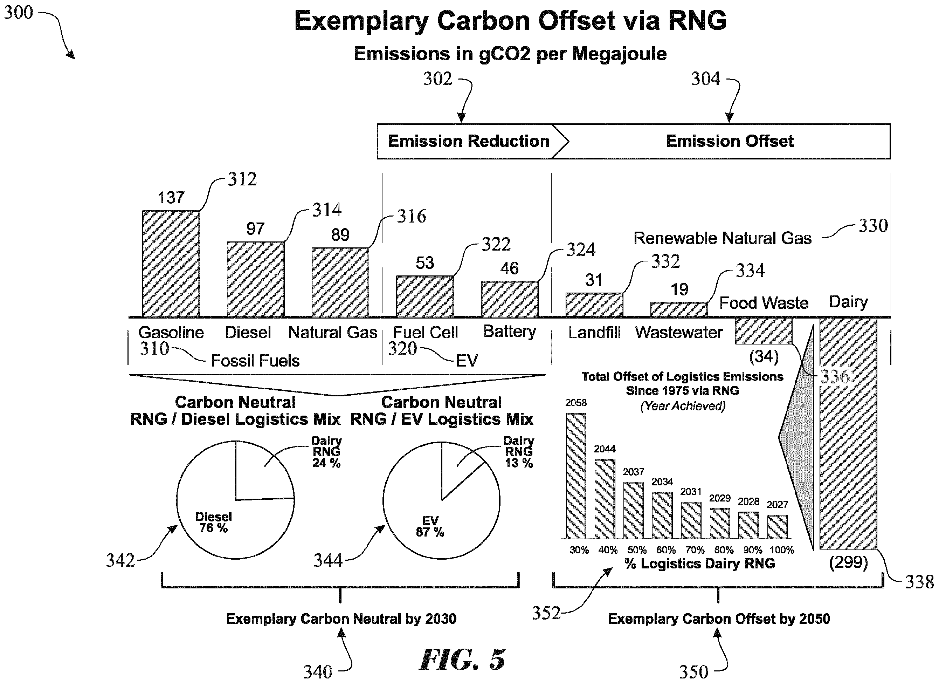

The environmental impact of various fuels is presented in several graphical representations presented in an exemplary carbon offset via renewable natural gas (RNG) study 300, shown in FIG. 5. Emissions in grams of CO2 per mega joule (gCO2/MJ) is presented in a bar graph format. The emissions are presented for three (3) distinct fuel categories: fossil fuels 310, electric vehicle power source 320, and renewable natural gas (RNG) 330. The use of electric powered vehicles (EV) 320 can be categorized as being emission reducing 302. The use of Renewable Natural Gas (RNG) can be categorized as providing an emission offset 304.

Exemplary fuels categorized under fossil fuels 310 include gasoline 312, diesel 314 and natural gas 316. When burned during compression, the gasoline 312 emits an estimated emissions rate of 137 gCO2/MJ. When burned during compression, the diesel 314 emits an estimated emissions rate of 97 gCO2/MJ. When burned during compression, the natural gas 316 emits an estimated emissions rate of 89 gCO2/MJ.

Exemplary power sources categorized under electric vehicle power source 320 includes a fuel cell 322 and a battery 324. When considering the overall environmental impact of providing an energy source, the fuel cell 322 generates an estimated emissions rate of 53 gCO2/MJ. When considering the overall environmental impact of providing an energy source, the battery 324 generates an estimated emissions rate of 46 gCO2/MJ.

Exemplary power sources categorized under renewable natural gas (RNG) 330 includes a landfill 332, a wastewater 334, a food waste 336, and a dairy 338.

When considering the overall environmental impact of providing an energy source, including sourcing and combustion, the landfill 332 generates an estimated emissions rate of 31 gCO2/MJ.

When considering the overall environmental impact of providing an energy source, including sourcing and combustion, the wastewater 334 generates an estimated emissions rate of 19 gCO2/MJ.

When considering the overall environmental impact of providing an energy source, including sourcing and combustion, the food waste 336 absorbs an estimated emissions rate of 34 gCO2/MJ (alternatively referred to as generating an estimated emissions rate of -34 gCO2/MJ).

When considering the overall environmental impact of providing an energy source, including sourcing and combustion, the dairy 338 absorbs an estimated emissions rate of 229 gCO2/MJ (alternatively referred to as generating an estimated emissions rate of -299 gCO2/MJ).

The exemplary carbon offset via renewable natural gas (RNG) study 300 presents use of varying degrees of different fuels to obtain a carbon neutral fleet of vehicles. A exemplary logistics solutions to meet a carbon neutral footprint 340 presents two exemplary pie charts using dairy sourced Renewable Natural Gas (RNG) as a base and different power sources to obtain a carbon neutral footprint by 2030. An exemplary dairy sourced renewable natural gas / diesel logistics solution 342 presents a scenario having a continued use of diesel fuel. In this exemplary scenario, the combination requires a usage rate of 24% of the consumed fuel being dairy sourced Renewable Natural Gas (RNG) and the reduction of diesel fuel to a usage rate of 76%.

An exemplary dairy sourced renewable natural gas / electric vehicle logistics solution 344 presents a scenario converting a portion of the fleet to electric vehicles and the balance using vehicles powered by dairy sourced Renewable Natural Gas (RNG). In this second exemplary scenario, the combination requires a usage rate of 13% of the consumed fuel being dairy sourced Renewable Natural Gas (RNG) and the remaining portion of the fleet using electric powered vehicles at a usage rate of 87% to achieve the same results.

Another method considering different paths to a carbon neutral footprint based upon a carbon output from 1975 is presented in a bar chart. A exemplary carbon offset via renewable natural gas (RNG) study 350 graphically presents the impact of increasing a percent utilization of dairy sourced Renewable Natural Gas (RNG) 352. When the use of dairy sourced Renewable Natural Gas (RNG) is 30% of fuel used by the total fleet, carbon offset is estimated be reached in 2058. When the use of dairy sourced Renewable Natural Gas (RNG) is 40% of fuel used by the total fleet, carbon offset is estimated to be reached in 2044. When the use of dairy sourced Renewable Natural Gas (RNG) is 50% of fuel used by the total fleet, carbon offset is estimated to be reached in 2037. When the use of dairy sourced Renewable Natural Gas (RNG) is 60% of fuel used by the total fleet, carbon offset is estimated to be reached in 2034. When the use of dairy sourced Renewable Natural Gas (RNG) is 70% of fuel used by the total fleet, carbon offset is estimated to be reached in 2031. When the use of dairy sourced Renewable Natural Gas (RNG) is 80% of fuel used by the total fleet, carbon offset is estimated to be reached in 2029. When the use of dairy sourced Renewable Natural Gas (RNG) is 90% of fuel used by the total fleet, carbon offset is estimated to be reached in 2028. When the use of dairy sourced Renewable Natural Gas (RNG) is 100% of fuel used by the total fleet, carbon offset is estimated to be reached in 2027.

The emissions from a power source are only one contributor to carbon emissions over the life cycle of the fuel composition. A renewable natural gas (RNG) vs. electric vehicle study 400 illustrates an impact on emissions of a power source over a life cycle of the power source when the power source is utilized by a transportation vehicle. The renewable natural gas (RNG) vs. electric vehicle study 400 additionally compares emissions between Renewable Natural Gas (RNG) and traditional electric vehicles (EVs). The renewable natural gas (RNG) vs. electric vehicle study 400 is based upon a number of assumptions 410. The assumptions 410 includes:
1) A vehicle size assumption 412, where the vehicle size assumption 412 is a mid-sized sedan
2) A battery production assumption 414, where the battery production assumption 414 considers battery production emissions of 50% of the total electric vehicle production emissions.
3) A electric vehicle (EV) battery life assumption 416, where the electric vehicle (EV) battery life assumption 416 considers a battery life of the electric vehicle of 112,000 miles.
4) A renewable natural gas (RNG) feedstock assumption 418, where the renewable natural gas (RNG) feedstock assumption 418 considers a flat Renewable Natural Gas (RNG) contribution over the lifetime of the vehicle.
5) A renewable natural gas (RNG) composition assumption 419, where the renewable natural gas (RNG) composition assumption 419 considers a Renewable Natural Gas (RNG) composition comprising 30% dairy sourced Renewable Natural Gas (RNG) and 70% landfill sourced Renewable Natural Gas (RNG).

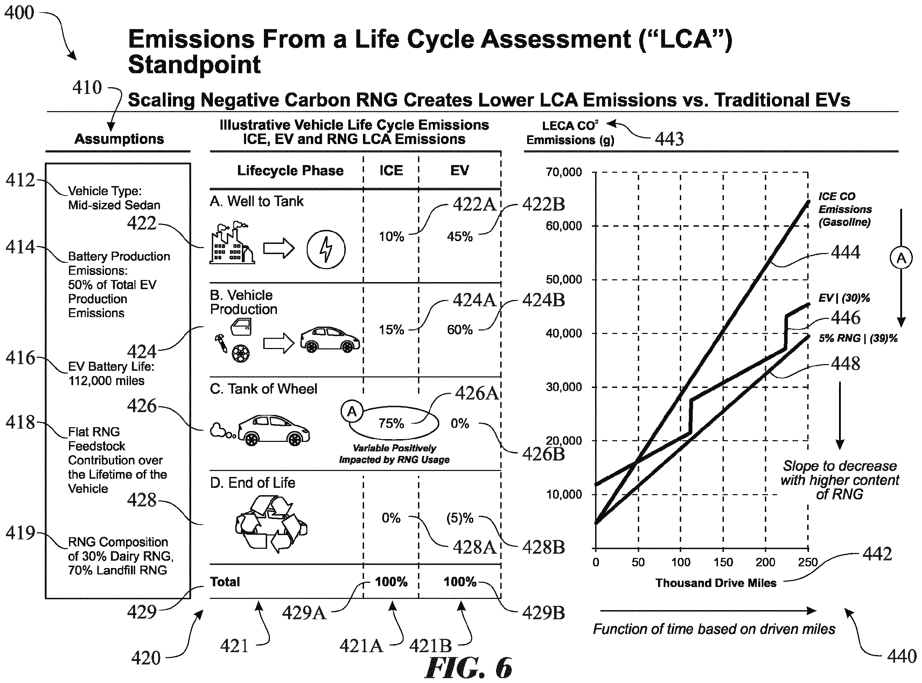

An exemplary impact of each phase of a lifecycle of a vehicle is presented in an exemplary vehicle lifecycle emissions 420, shown in FIG. 6. Each phase is identified in a column identified as a life cycle stage 421. The four stages of the lifecycle 421 are: a well to tank life cycle stage 422, a vehicle production life cycle stage 424, a tank to wheel life cycle stage 426, and a end of life, life cycle stage 428. The lifecycles are presented for two (2) categories: Internal Combustion Engines (ICE), including both gasoline and Renewable Natural Gas (RNG).

The emissions associated with each segment of lifecycles for each of: Internal Combustion Engines (ICE), including both gasoline and Renewable Natural Gas (RNG) (emissions being presented in the life cycle stage for internal combustion engine (ICE) percent emissions 421A) and electric vehicles (EV) (emissions being presented in the life cycle stage for electric vehicle (EV) percent emissions 421B). The only distinction between a gasoline powered internal combustion engine and a Liquefied Natural Gas (LNG) Internal Combustion Engine (ICE) is identified in a tank to wheel life cycle stage for internal combustion engine (ICE) percent emissions 426A. The distinction is illustrated in the line chart shown in emissions over miles driven chart 440 of FIG. 6.

Emissions associated with each segment of the life cycle stage 421 for a gasoline or Liquefied Natural Gas (LNG) powered Internal Combustion Engine (ICE) are presented within a life cycle stage for internal combustion engine (ICE) percent emissions 421A. Emissions associated with each segment of the life cycle stage 421 for an electric powered vehicle (EV) are presented within a life cycle stage for electric vehicle (EV) percent emissions 421B.

In more detail, emissions associated with a well to tank life cycle stage 422 portion of the life cycle stage 421 for a gasoline or Liquefied Natural Gas (LNG) powered Internal Combustion Engine (ICE) are identified as a well to tank life cycle stage for internal combustion engine (ICE) percent emissions 422A (10%) within the life cycle stage for internal combustion engine (ICE) percent emissions 421A. Similarly, emissions associated with a well to tank life cycle stage 422 portion of the life cycle stage 421 for the electric powered vehicle (EV) are identified as a well to tank life cycle stage for electric vehicle (EV) percent emissions 422B (45%) within the life cycle stage for electric vehicle (EV) percent emissions 421B.

Emissions associated with a vehicle production life cycle stage 424 portion of the life cycle stage 421 for a gasoline or Liquefied Natural Gas (LNG) powered Internal Combustion Engine (ICE) are identified as a vehicle production life cycle stage for internal combustion engine (ICE) percent emissions 424A (15%) within the life cycle stage for internal combustion engine (ICE) percent emissions 421A. Similarly, emissions associated with a vehicle production life cycle stage 424 portion of the life cycle stage 421 for the electric powered vehicle (EV) are identified as a vehicle production life cycle stage for electric vehicle (EV) percent emissions 424B (60%) within the life cycle stage for electric vehicle (EV) percent emissions 421B.

Emissions associated with a tank to wheel life cycle stage 426 portion of the life cycle stage 421 for a gasoline or Liquefied Natural Gas (LNG) powered Internal Combustion Engine (ICE) are identified as a tank to wheel life cycle stage for internal combustion engine (ICE) percent emissions 426A (75%, variable based upon Renewable Natural Gas (RNG) usage) within the life cycle stage for internal combustion engine (ICE) percent emissions 421A. Similarly, emissions associated with a tank to wheel life cycle stage 426 portion of the life cycle stage 421 for the electric powered vehicle (EV) are identified as a tank to wheel life cycle stage for electric vehicle (EV) percent emissions 426B (0%) within the life cycle stage for electric vehicle (EV) percent emissions 421B.

Emissions associated with a end of life, life cycle stage 428 portion of the life cycle stage 421 for a gasoline or Liquefied Natural Gas (LNG) powered Internal Combustion Engine (ICE) are identified as a end of life, life cycle stage for internal combustion engine (ICE) percent emissions 428A (0%) within the life cycle stage for internal combustion engine (ICE) percent emissions 421A. Similarly, emissions associated with a end of life, life cycle stage 428 portion of the life cycle stage 421 for the electric powered vehicle (EV) are identified as a end of life, life cycle stage for electric vehicle (EV) percent emissions 428B are actually reversed (-5%) within the life cycle stage for electric vehicle (EV) percent emissions 421B.

The sum of the emissions of each segment of the life cycle stage 421 is summarized in a total 429. The total of the sum of the emissions of each segment for the lifecycle of the gasoline or Renewable Natural Gas (RNG) powered Internal Combustion Engine (ICE) is presented as a total for internal combustion engine (ICE) percent emissions 429A (100%). The total of the sum of the emissions of each segment for the lifecycle of the electric powered vehicle (EV) is presented as a total for electric vehicle (EV) percent emissions 429B (100%).

Emission rates for the exemplary fuels are graphically illustrated on the emissions over miles driven chart 440. The emissions over miles driven chart 440 charts emissions (recorded along an axis charting a CO2 emissions 443) against a mileage driven (along an axis charting a driven vehicle mileage 442 (in thousands of miles)). Emissions over miles driven for the gasoline powered Internal Combustion Engine (ICE) are referenced by an internal combustion engine (ICE) vehicle data 444. Emissions over miles driven for the Renewable Natural Gas (RNG) powered Internal Combustion Engine (ICE) are referenced by a renewable natural gas (RNG) vehicle data 448. Emissions over miles driven for the electric powered vehicle (EV) are referenced by a electric vehicle (EV) data 446. The electric vehicle (EV) data 446 includes a step function at each battery exchange based upon the assumed battery life mileage (112,000 miles).

As shown in FIG. 5, a fuel composition comprising Liquefied Natural Gas (LNG) generates an emission of 89 gCO2/MJ, while a fuel composition comprising Renewable Natural Gas (RNG) processed from dairy draws an emission reduction of 299 gCO2/MJ. These can be combined into a fuel composition meeting desired optimizing for both economic standpoint and an environmental standpoint. The fuel composition can be manufactured in accordance with any of the suggested mixtures presented in FIGS. 3A and 3B above.

It will be understood that the embodiments shown in the drawings and described above are merely for illustrative purposes, and are not intended to limit the scope of the invention, which is defined by the claims, which follow as interpreted under the principles of patent law including the Doctrine of Equivalents.

### Reference Element List

### Ref. No. Description

- 100: fuel emissions table
- 102: fuel type
- 104: emissions (GR CO2 / MJ)
- 106: US dollars / one million British Thermal Units (USD/MMBTU)
- 110: conventional liquefied natural gas (LNG)
- 112: dairy sourced bio liquefied natural gas (RNG)
- 114: gasoline
- 116: bio ratio liquefied natural gas (Bio Ratio)
- 118: zero emission liquefied natural gas (LNG)
- 120: conventional liquefied natural gas (LNG) emission rate
- 122: dairy sourced bio liquefied natural gas (RNG) emission rate
- 124: gasoline emission rate
- 126: biogas to liquefied natural gas ratio (Bio Ratio)
- 128: zero emission liquefied natural gas (LNG) emission rate
- 130: conventional liquefied natural gas (LNG) cost efficiency
- 132: dairy sourced bio liquefied natural gas (RNG) cost efficiency
- 134: gasoline cost efficiency
- 138: zero emission liquefied natural gas (LNG) cost efficiency
- 150: biomix Liquefied Natural Gas (LNG) composition by percentage of total volume
- 152: Renewable Natural Gas (RNG) percentage of total volume
- 154: fossil sourced Liquefied Natural Gas (LNG) percentage of total volume
- 160: biomix Liquefied Natural Gas (LNG) composition by a Renewable Natural Gas (RNG) ratio
- 162: Renewable Natural Gas (RNG) percentage of ratio
- 200: transportation fuel carbon intensity chart
- 202: greenhouse gas emission rate (CO2 / MU)
- 204: transportation fuels
- 210: diesel fuel
- 210A: diesel fuel emission rate
- 212: natural gas
- 212A: natural gas emission rate
- 214: hydrogen
- 214A: hydrogen emission rate
- 216: renewable diesel (RD)
- 216A: renewable diesel (RD) emission rate
- 218: biodiesel fuel
- 218A: biodiesel fuel emission rate
- 220: electricity
- 220A: electricity emission rate
- 222: landfill sourced renewable natural gas (RNG)
- 222A: landfill sourced renewable natural gas (RNG) emission rate
- 224: wastewater sourced renewable natural gas (RNG)
- 224A: wastewater sourced renewable natural gas (RNG) emission rate
- 226: dairy sourced renewable natural gas (RNG)
- 226A: dairy sourced renewable natural gas (RNG) emission rate
- 300: exemplary carbon offset via renewable natural gas (RNG) study
- 302: emission reduction
- 304: emission offset
- 310: fossil fuels
- 312: gasoline
- 314: diesel
- 316: natural gas
- 320: electric vehicles
- 322: fuel cell
- 324: battery
- 330: renewable natural gases (RNG)
- 332: landfill
- 334: wastewater
- 336: food waste
- 338: dairy
- 340: exemplary logistics solutions to meet a carbon neutral footprint
- 342: exemplary dairy sourced renewable natural gas / diesel logistics solution
- 344: exemplary dairy sourced renewable natural gas / electric vehicle logistics solution
- 350: exemplary carbon offset via renewable natural gas (RNG) study
- 352: exemplary carbon offset via renewable natural gas (RNG) options
- 400: renewable natural gas (RNG) vs. electric vehicle study
- 410: assumptions
- 412: vehicle size assumption
- 414: battery production assumption
- 416: electric vehicle (EV) battery life assumption
- 418: renewable natural gas (RNG) feedstock assumption
- 419: renewable natural gas (RNG) composition assumption
- 420: exemplary vehicle lifecycle emissions
- 421: life cycle stage
- 421A: life cycle stage for internal combustion engine (ICE) percent emissions
- 421B: life cycle stage for electric vehicle (EV) percent emissions
- 422: well to tank life cycle stage
- 422A: well to tank life cycle stage for internal combustion engine (ICE) percent emissions
- 422B: well to tank life cycle stage for electric vehicle (EV) percent emissions
- 424: vehicle production life cycle stage
- 424A: vehicle production life cycle stage for internal combustion engine (ICE) percent emissions
- 424B: vehicle production life cycle stage for electric vehicle (EV) percent emissions
- 426: tank to wheel life cycle stage
- 426A: tank to wheel life cycle stage for internal combustion engine (ICE) percent emissions
- 426B: tank to wheel life cycle stage for electric vehicle (EV) percent emissions
- 428: end of life, life cycle stage
- 428A: end of life, life cycle stage for internal combustion engine (ICE) percent emissions
- 428B: end of life, life cycle stage for electric vehicle (EV) percent emissions
- 429: total
- 429A: total for internal combustion engine (ICE) percent emissions
- 429B: total for electric vehicle (EV) percent emissions
- 440: emissions over miles driven chart
- 442: driven vehicle mileage
- 443: CO2 emissions
- 444: internal combustion engine (ICE) vehicle data
- 446: electric vehicle (EV) data
- 448: renewable natural gas (RNG) vehicle data

## Claims

1. A fuel composition provided in a liquefied state, the fuel composition comprising:
a biomass generated Renewable Natural Gas (RNG); and
a fossil generated one of (a) a Liquefied Natural Gas (LNG) or (b) a fossil generated Compressed Natural Gas (CNG),
wherein the fossil generated one of (a) a Liquefied Natural Gas (LNG) or (b) a fossil generated Compressed Natural Gas (CNG) is provided in a volume defining a first percentage of a total volume of the fuel composition,
wherein the biomass generated Renewable Natural Gas (RNG) is provided in a volume defining a second percentage of the total volume of the fuel composition,
wherein a carbon intensity of the sum of the first percentage and the second percentage is equal to zero.

2. A fuel composition provided in a liquefied state as recited in claim 1, wherein the biomass generated Renewable Natural Gas (RNG) is produced by at least one of:
a) anaerobic digestion of organic material,
b) production through the sabatier reaction, and
c) thermal gasification of organic material.

3. A fuel composition provided in a liquefied state as recited in claim 1, wherein the biomass generated Renewable Natural Gas (RNG) comprising approximately 30% dairy RNG and approximately 70% landfill RNG.

4. A fuel composition provided in a liquefied state as recited in claim 1, further comprising at least one of:
a) a cleansing solution,
b) a moisture absorbent, and
c) a combustion additive.

5. A fuel composition provided in a liquefied state, the fuel composition comprising:
a fossil generated Liquefied Natural Gas (LNG); and
a biomass generated Renewable Natural Gas (RNG),
wherein is provided in a volume defining a first percentage of a total volume of the fuel composition,
wherein a volume of the biomass generated Renewable Natural Gas (RNG) and a volume of the fossil generated Liquefied Natural Gas (LNG) are determined by a ratio between the volume of the biomass generated Renewable Natural Gas (RNG) and the volume of the fossil generated Liquefied Natural Gas (LNG),
wherein the ratio between the volume of the biomass generated Renewable Natural Gas (RNG) and the volume of the fossil generated Liquefied Natural Gas (LNG) results in a fuel that emits zero emissions.

6. A fuel composition provided in a liquefied state as recited in claim 5, wherein the ratio between the volume of the biomass generated Renewable Natural Gas (RNG) and the volume of the fossil generated Liquefied Natural Gas (LNG) is within a range of 15 to 35 percent.

7. A fuel composition provided in a liquefied state as recited in claim 5, wherein the ratio between the volume of the biomass generated Renewable Natural Gas (RNG) and the volume of the fossil generated Liquefied Natural Gas (LNG) is within a range of 17 to 30 percent.

8. A fuel composition provided in a liquefied state as recited in claim 5, wherein the ratio between the volume of the biomass generated Renewable Natural Gas (RNG) and the volume of the fossil generated Liquefied Natural Gas (LNG) is within a range of 19 to 28 percent.

9. A fuel composition provided in a liquefied state as recited in claim 5, wherein the ratio between the volume of the biomass generated Renewable Natural Gas (RNG) and the volume of the fossil generated Liquefied Natural Gas (LNG) is within a range of 21 to 26 percent.

10. A fuel composition provided in a liquefied state as recited in claim 5, wherein the ratio between the volume of the biomass generated Renewable Natural Gas (RNG) and the volume of the fossil generated Liquefied Natural Gas (LNG) is within a range of 22.7 to 24.7 percent.

11. A fuel composition provided in a liquefied state as recited in claim 5, wherein the ratio between the volume of the biomass generated Renewable Natural Gas (RNG) and the volume of the fossil generated Liquefied Natural Gas (LNG) is within a range of 23.2 to 24.2 percent.

12. A fuel composition provided in a liquefied state as recited in claim 5, wherein the ratio between the volume of the biomass generated Renewable Natural Gas (RNG) and the volume of the fossil generated Liquefied Natural Gas (LNG) is within a range of 23.5 to 23.9 percent.

13. A fuel composition provided in a liquefied state as recited in claim 5, wherein the biomass generated Renewable Natural Gas (RNG) is produced by at least one of:
a) anaerobic digestion of organic material,
b) production through the sabatier reaction, and
c) thermal gasification of organic material.

14. A fuel composition provided in a liquefied state as recited in claim 5, wherein the biomass generated Renewable Natural Gas (RNG) comprising approximately 30% dairy RNG and approximately 70% landfill RNG.

15. A fuel composition provided in a liquefied state as recited in claim 5, further comprising at least one of:
a) a cleansing solution,
b) a moisture absorbent, and
c) a combustion additive.

16. A fuel composition provided in a liquefied state, the fuel composition comprising:
a fossil generated Compressed Natural Gas (CNG); and
a biomass generated Renewable Natural Gas (RNG),
wherein the fossil generated Compressed Natural Gas (CNG) is provided in a volume defining a first percentage of a total volume of the fuel composition,
wherein the biomass generated Renewable Natural Gas (RNG) is provided in a volume defining a second percentage of the total volume of the fuel composition,
wherein the carbon intensity of the sum of the first percentage and the second percentage is equal to zero.
